# EUROPEAN PATENT SPECIFICATION

(11) **EP 1 007 874 B1**
(45) Date of publication and mention of the grant of the patent: **28.01.2004**
(21) Application number: 98920657.8
(22) Date of filing: 08.05.1998
(51) Int. Cl.: F16L 3/12, F16B 2/22, F16B 37/00

(54) **PLASTIC SUPPORT DEVICES ESPECIALLY FOR PIPES AND CABLES**
STÜTZVORRICHTUNG AUS KUNSTSTOFF, INSBESONDERE FÜR ROHRE UND KABEL
DISPOSITIFS DE SUPPORT EN MATIERE PLASTIQUE CON US TOUT PARTICULIEREMENT POUR DES CONDUITS ET DES CABLES

(30) Priority: 28.08.1997 GB 9718247
(43) Date of publication of application: 14.06.2000
(73) Proprietor: Rapid Positioning Clips Limited, Bordon, Hampshire GU35 9QF (GB)
(72) Inventor: PHILLIPS, Raymond, John, Hampshire GU34 2DH (GB)
(74) Representative: Bubb, Antony John Allen
(86) International application number: PCT/GB1998/001331
(87) International publication number: WO 1999/011959

(56) References cited:
- DE-A- 2 334 913
- DE-A- 4 309 210
- GB-A- 1 371 850
- JP-A- 8 121 655
- US-A- 531 920
- US-A- 2 333 388
- US-A- 4 305 557

## Description

The present invention relates to a support for elongate members particularly, although not exclusively, overhead pipework and cabling.

Conventionally, pipework and cabling has been suspended above false ceilings by means of simple, usually metallic, fittings threadingly engaged on studs or rods depending from the ceiling. Such fittings have often been inconvenient to use as well as relatively expensive to manufacture. Previously, different types of fittings have been manufactured to support different loads for example pipework or cabling.

US-A-5,351,920 discloses a device according to the preamble of Claim 1. However, resilient fingers maintain the rod in place.

GB-A-1371850 discloses an attachment device comprising a plate being provided with spaced apart C-shaped clips having oppositely directed openings whereby a rod can be snapped into engagement with the internal surfaces of the clips by introducing the rod into a space between the clips and then turning the rod and attachment device relatively to one another, wherein each of the C-shaped clips subtends an angle substantially greater than 180°. However, the device according to GB-A-1371850 is not for use with a threaded rod.

JP-8121655 and JP-8121656 both disclose a long object support with engaging parts which freely engage with a fixed rod-shaped object. A threaded rod can be snapped into engagement with the internal surfaces of the engaging parts by introducing the rod into the space between the engaging parts and turning the rod and support relatively to each other. A retaining part within a reception part of the engaging parts retains the rod by elasticity and fitted projections on the inner peripheral surfaces of the retaining parts engage with screw parts of a threaded rod.

It is thus an object of the present invention to provide an improved support device which overcomes the disadvantages of the prior art and which furthermore allows one-handed installation.

This object is achieved by the features of the characteristic clause of Claim 1.

Preferably the support device has an integrally formed fitting for supporting an elongate member, such as a cable clip.

In order to aid in understanding the invention a number of embodiments thereof will now be described by way of example with reference to the accompanying drawings, in which:
Figure 1 is a side view of a support device according to the present invention;
Figure 2 is a perspective view of the device of Fig. 1;
Figure 3 is an end view elevation of the device of Fig. 1; and
Figure 4 is a plan view of the device of Fig. 1.

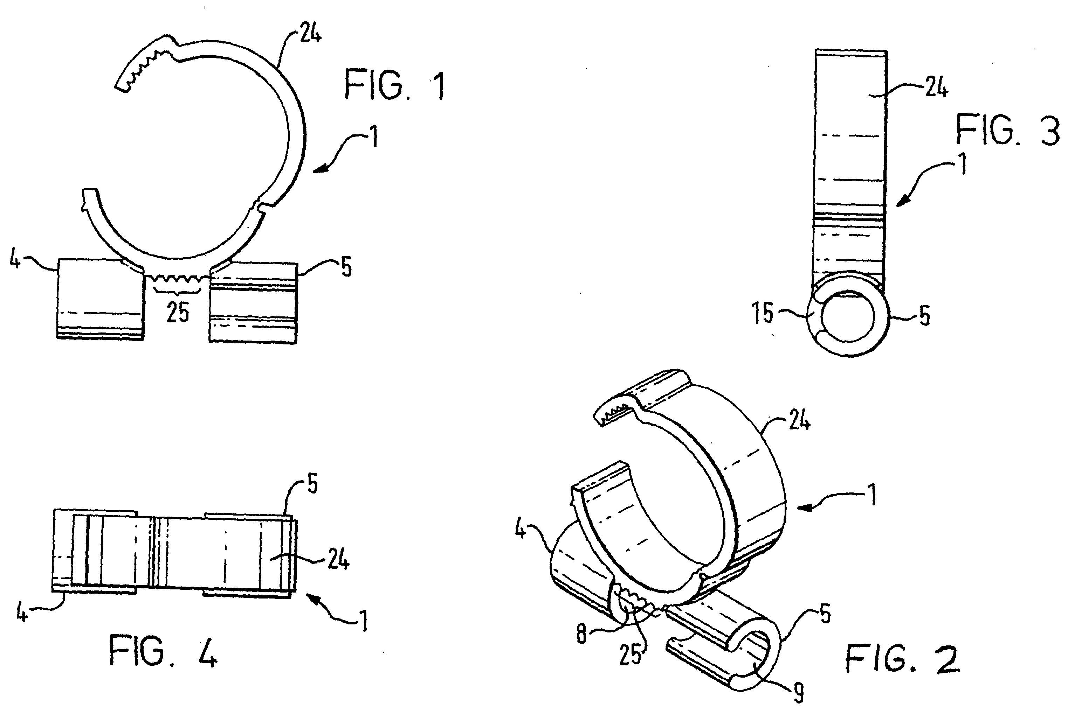

The support device shown in Figs. 1 to 4 provides a support device 1 with means for engaging a separate fitting, the fitting, which takes the form of a cable clip 24, is formed integrally with the support device 1. It will, of course, be appreciated by those skilled in the art that the device may be formed of any desired type of fitting and is therefore not limited to a cable clip. Furthermore, the present invention incorporates the additional feature of a serrated friction portion 25 positioned between the fingers 4,5 on the interconnecting vertical portion 3 of the body 2. The friction portion 25 is intended to frictionally engage with the rod and thereby assist in preventing the support device 1 from slipping along the rod when the fitting is under load. The device of the present invention has been found to be effective with both threaded and unthreaded rods.

It will be appreciated by those skilled in the art that the present invention permits one handed attachment of a support device to rods. This is a valuable benefit when it is realised that such devices are frequently installed close to the ceiling of a building whilst the installer is standing on a ladder or such-like. Furthermore, it is particularly useful where it is not possible or convenient to have access to a free end of a rod as their construction permits the device to be installed at any point along the rod and in the case of a threaded rod simply wound along the rod to the desired position.

## Claims

1. A support device for use in supporting a member from a threaded rod, comprising a body (1) formed by injection moulding from a resilient synthetic plastics material, said body including a pair of spaced apart C-shaped clips (4,5) having part cylindrical internal surfaces aligned on a common axis, said clips respectively having oppositely directed openings whereby a threaded rod can be snapped into engagement with the internal surfaces of said clips by introducing the rod into a space between the clips and then turning the rod and the support device relatively to one another, said support device further having a grooved or serrated surface (25) for engagement with the threads of said threaded rod, **characterised in that** each of the said C-shaped clips (4,5) subtends an angle substantially greater than 180° whereby a threaded rod when snapped into said clips is retained thereby without other aid, that the internal surfaces of the clips that subtend an angle substantially greater than 180° comprise smooth unthreaded part cylindrical surfaces (8,9) and that the said grooved or serrated surface (25) of the support device is located adjacent the said smooth part cylindrical surfaces (8,9) of the clips in such a manner that it engages the threads of a threaded rod when the rod is held in place within the said clips.

2. A support device as claimed in Claim 1, wherein said support device has an integrally formed fitting for supporting an elongate member.

3. A support device as claimed in Claim 2, wherein said fitting is a cable clip.

## Patentansprüche

1. Stützvorrichtung zum Haltern eines Bauteils an einer Gewindestange, umfassend einen Grundkörper (1) der durch Spritzgießen aus einem federnden Kunststoffmaterial geformt ist, wobei der genannte Grundkörper zwei beabstandete etwa C-förmige Klips (4, 5) enthält, welche innere Teilzylinderflächen aufweisen, die auf einer gemeinsamen Achse ausgerichtet sind, und wobei die genannten Klips jeweils auf gegenüberliegenden Seiten liegende Öffnungen aufweisen, wodurch eine Gewindestange in Eingriffstellung mit den Innenflächen der genannten Klips durch Einführen der Stange in den Raum zwischen den Klips und dann durch Drehen der Stange und der Abstützvorrichtung relativ gegeneinander eingeschnappt werden kann, und wobei die genannte Abstützvorrichtung darüber hinaus eine genutete oder gezähnte Oberfläche (25) zum Eingreifen in die Gewindegänge der genannten Gewindestange aufweist, **dadurch gekennzeichnet, dass** jeder der genannten C-förmigen Klips (4, 5) sich über einen Winkel erstreckt der wesentlich größer ist als 180°, wodurch die Gewindestande nach dem Einschnappen in die besagten Klips ohne weitere Hilfe gehaltert ist, dass die Innenflächen der Klips, die so sich über einen Winkel erstrecken der wesentlich größer ist als 180°, glatte gewindefreie zylindrische Teilflächen (8, 9) aufweisen und dass die genannte genutete oder gezähnte Fläche (25) der Abstützvorrichtung zwischen den besagten glatten Teilzylinderflächen (8, 9) der Klips derart angeordnet ist, dass sie in die Gewindegänge des Gewindestabs eingreift, wenn dieser in den genannten Klips gehaltert ist.

2. Abschnittsvorrichtung nach Anspruch 1, **dadurch gekennzeichnet, dass** sie mit einem einstückig angeformten Befestigungsteil für ein langgestrecktes Bauteil versehen ist.

3. Abschnittsvorrichtung nach Anspruch 2, **dadurch gekennzeichnet, dass** das Befestigungsteil ein Kabelklipp ist.

## Revendications

1. Dispositif de support destiné à être utilisé pour supporter un élément à partir d'une tige filetée, comprenant un corps (1) formé par moulage par injection à partir d'un matériau en plastique synthétique élastique, ledit corps comprenant une paire d'étriers en forme de C espacés (4, 5) présentant des surfaces intérieures partiellement cylindriques alignées sur un axe commun, lesdits étriers présentant respectivement des ouvertures dirigées, moyennant quoi une tige filetée peut être mise en prise par pression avec les surfaces intérieures desdits étriers en introduisant la tige dans un espace entre les étriers puis en tournant la tige et le dispositif de support l'un par rapport à l'autre, ledit dispositif de support présentant en outre une surface rainurée ou dentelée (25) pour la mise en prise avec les filetages de ladite tige filetée, **caractérisé en ce que** chacun desdits étriers en forme de C (4, 5) sous-tend un angle sensiblement supérieur à 180°, moyennant quoi une tige filetée, lorsqu'elle est pressionnée dans lesdits étriers, y est conservée sans autre aide, **en ce que** les surfaces intérieures des étriers qui sous-tendent un angle sensiblement supérieur à 180° comprennent des surfaces lisses non filetées partiellement cylindriques (8, 9), et **en ce que** ladite surface rainurée ou dentelée (25) du dispositif de support est située de manière adjacente aux dites surfaces lisses partiellement cylindriques (8, 9) des étriers, de manière à ce qu'elle mette en prise les filetages d'une tige filetée quand la tige est maintenue en place à l'intérieur desdits étriers.

2. Dispositif de support selon la revendication 1, dans lequel ledit dispositif de support possède un raccord intégralement formé destiné à supporter un élément oblong.

3. Dispositif de support selon la revendication 2, dans lequel ledit raccord est un attache-câble.
